(19) Europäisches Patentamt

European Patent Office

Office européen des brevets

(11) **EP 0 934 558 B1**

(12) **FASCICULE DE BREVET EUROPEEN**

(45) Date de publication et mention
de la délivrance du brevet:
**05.09.2001 Bulletin 2001/36**

(51) Int Cl.$^7$: **G05D 11/00**

(21) Numéro de dépôt: **95927772.4**

(86) Numéro de dépôt international:
**PCT/FR95/01067**

(22) Date de dépôt: **08.08.1995**

(87) Numéro de publication internationale:
**WO 97/06476 (20.02.1997 Gazette 1997/09)**

(54) **DOSEUR A PROPORTIONS AJUSTABLES AVEC DISTRIBUTION DES LIQUIDES COMMANDEE POSITIVEMENT PAR TIROIRS**

ANPASSBARE PROPORTIONIERVORRICHTUNG ZUR VERTEILUNG VON FLÜSSIGKEITEN,WELCHE POSITIV DURCH SCHUBLADEN GESTEUERT WIRD

METERING DEVICE WITH ADJUSTABLE PROPORTIONS AND LIQUID DISPENSING POSITIVELY CONTROLLED BY SLIDE VALVES

(84) Etats contractants désignés:
**DE ES GB IT**

(43) Date de publication de la demande:
**11.08.1999 Bulletin 1999/32**

(72) Inventeur: **Ferrand, Thierry**
**92370 Chaville (FR)**

(56) Documents cités:
**EP-A- 0 007 109**   **WO-A-88/09006**

(73) Titulaire: **Ferrand, Thierry**
**92370 Chaville (FR)**

# Description

Le dispositif selon l'invention est destiné à injecter un produit liquide dans le flux d'un autre produit liquide, dans des proportions précises, fidèles et ajustables.

Dans les cas les plus fréquents, le flux principal est une conduite d'eau devant assurer une fonction d'irrigation agricole avec addition de produits de traitement ou d'engrais, de fourniture d'eau de boisson pour l'alimentation des animaux d'élevage, avec addition d'aliments liquides ou de médicaments, de fourniture d'eau industrielle avec addition de désinfectants, de détergents, d'antiseptiques, etc...

Le dispositif selon l'invention telle que définie dans la revendication 1 comprend essentiellement un moteur hydraulique volumétrique entraîné par le flux principal, agissant comme mesureur de débit et qui entraîne positivement une pompe également volumétrique destinée à l'injection du produit secondaire. Cette pompe à une cylindrée utile variable à volonté pour permettre l'ajustement de la proportion du liquide secondaire injecté dans le flux du liquide principal.

On connait plusieurs dispositifs utilisés pour réaliser ce genre de fonction. Le document WO 88/09006, par example, décrit une pompe d'injection d'un liquide secondaire directement dans le conduit de sortie d'un liquide principal. Il comprend un moteur hydraulique actionnant un piston differentiel à mouvement alternatif, des tiroirs et un injecteur. Le dit piston injecteur, relié au piston moteur, est muni de moyens internes ou externes pour faire varier le mouvement résultant du piston et par consequent les dosages réalisables. Le principal reproche fait par les utilisateurs est relatif à l'inconstance de la cylindrée réelle du moteur-mesureur de débit en fonction du régime de travail. L'imprécision de l'ouverture et de la fermeture des systèmes de clapets à bascule par ressorts font que lorsque la fréquence de travail augmente, la course utile des pistons moteurs s'allonge avant que les clapets n'aient pu inverser le sens du flux. Il en résulte une augmentation de la cylindrée utile par cycle avec comme corollaire une diminution de la proportion de liquide injecté.

Le dispositif selon l'invention comprend un moteur hydraulique et une pompe d'injection de cylindrées rigoureusement constantes. Il est remarquable par un système de distribution des fluides, aussi bien principal que secondaire, entraîné positivement, synchrone et en phase correcte et constante par rapport à la position respective des différents pistons.

La description des figures jointes, données uniquement à titre d'exemples non limitatifs, permettra de mieux comprendre la chaîne cinématique et le processus original du dispositif selon l'invention.

Pour simplifier les explications, il n'est pas fait état des joints et autres dispositifs d'étancheité obligatoires dont la présence est évidente pour l'homme de l'art.

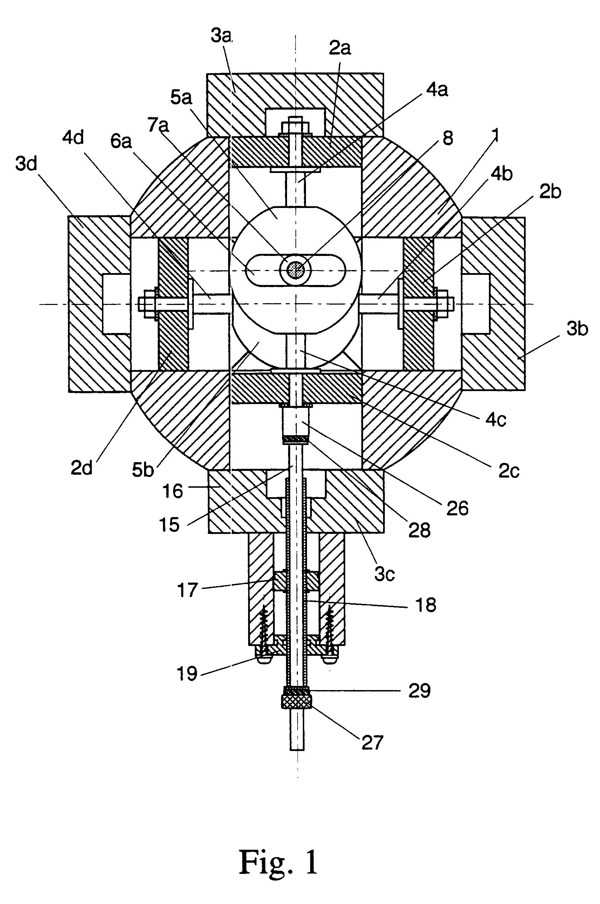

La Fig. 1 représente un dispositif selon l'invention en coupe transversale. Dans le corps principal 1 ont été aménagés 4 alésages, alignés deux par deux, chaque groupe étant sensiblement décalé et orthogonal par rapport à l'autre, recevant respectivement les pistons 2a, 2b, 2c et 2d. Chacun des 4 alésages est fermé par une culasse étanche 3a, 3b, 3c et 3d. Les pistons alignés sont liés par un attelage comprenant deux tiges 4a et 4c, ou 4b et 4d fixées sur une coulisse 5a ou 5b. Chaque coulisse est munie d'une rainure 6a, 6b qui reçoit un galet 7a, 7b tourillonnant sur l'axe excentré 8 reliant deux rotors 9a et 9b.

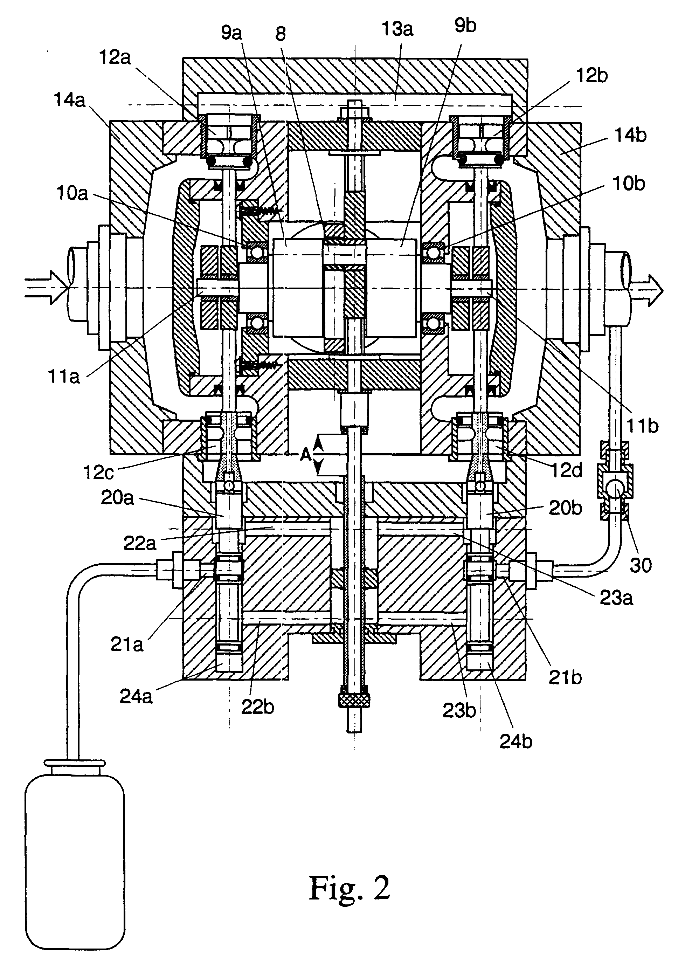

La Fig. 2 représente le même dispositif en coupe longitudinale. On voit l'axe 8 disposé excentriquement dans deux rotors 9a et 9b, portés par deux paliers 10a et 10b qui peuvent être deux roulements à billes. De part et d'autre de ces rotors des manetons 11a et 11b ont été disposés, excentrés et dans un plan orthogonal par rapport au plan contenat l'axe 8, l'un au dessus de ce plan, l'autre au dessous. Ces 2 manetons reçoivent chacun un couple d'attelages semblables à ceux des pistons principaux, reliés à des tiroirs 12a, 12b, 12c, 12d etc...Il y a au total 8 tiroirs qui se déplacent dans des alésages disposés dans le corps 1, parallèles aux alésages recevant les pistons moteurs.

Chaque piston est associé à deux tiroirs disposés de part et d'autre, et les culasses 3a, 3b, 3c et 3d ont été pourvues de rainures 13a et 13b, 13c et 13d qui mettent en correspondance les tiroirs et les pistons.

La disposition relative particulière des axes 8 et 11a et 11b décrite plus haut, ainsi que les judicieuses dimentions des alésages contenant les tiroirs sont telles que lorsque chaque piston moteur se trouve à un point de changement de sens (point mort), les tiroirs associés se trouvent au milieu de leur course respective, l'un sur le point de quitter son alésage, l'autre sur le point d'y entrer.

Le corps 1 est fermé, à chaque extrémité, par un fond étanche 14a et 14b relié respectivement au tuyau convoyant le fluide principal, l'un coté amont, l'autre coté aval. Suivant le sens du raccordement de l'appareil au conduit du fluide principal, les rotors tourneront dans un sens ou dans l'autre.Si le fond 14a est relié coté amont, il reçoit le fluide sous pression qui sera distribué par les 4 tiroirs débouchant dans cette cavité vers les pistons moteurs. La disposition en croix des alésages des pistons moteurs fait qu'il y a toujours deux pistons successifs sous pression ce qui assure la continuité et la régularité du mouvement de rotation de l'ensemble tournant sur les paliers 10a et 10b. L'amplitude du déplacement des pistons est fixe et égale à deux fois la valeur de l'excentration de l'axe 8, il en résulte une rigoureuse constance de la cylindrée. La distribution du liquide, aussi bien en phase remplissage qu'en phase échappement, est toujours rigoureusement et positivement contrôlée, les tiroirs assurant avec précision et constance les débuts et les fins de périodes. Il en résulte un très faible débit parasite, une bonne aptitude au fonctionnement à très bas régime conduisant à une grande dynamique d'emploi.

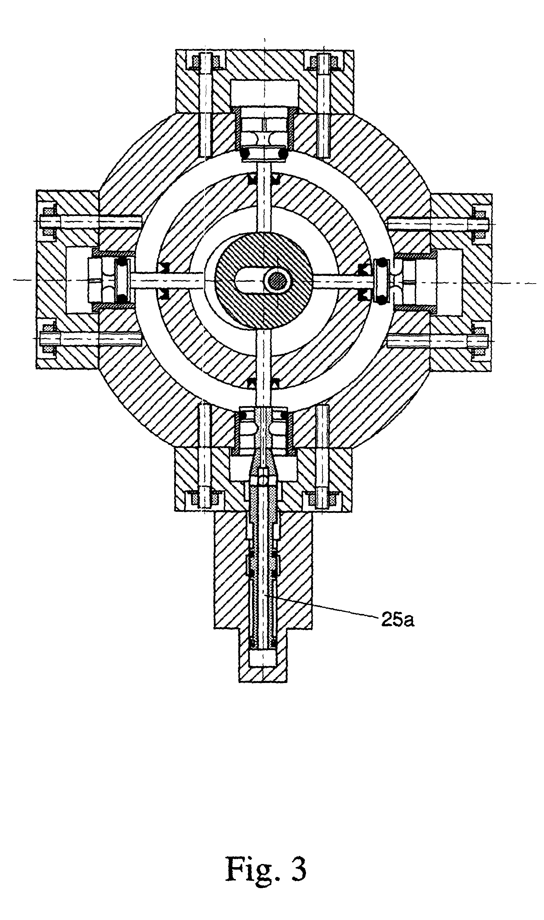

Les Fig. 1 Fig. 2 et Fig. 3 montrent une disposition particulière où l'un des pistons, le 2c, est prolongé par une tige 15 qui suit exactement les mouvements dudit piston. La culasse qui est associée à ce piston est coiffée à son tour par un bloc 16, les deux recevant 3 passages respectivement alignés avec le piston principal et avec ses deux tiroirs.

L'alésage central du bloc 16 reçoit un piston injecteur 17 lié rigidement à un tube 18 entourant la tige 15. Un couvercle amovible 19 permet la mise en place du piston injecteur dans son alésage.

Dans les alésages latéraux sont disposés deux tiroirs 20a et 20b reliés rigidement aux tiroirs associés au piston moteur. Ces alésages comprennent des portions avec des diamètres différents, certains ajustés aux joints qui garnissent les tiroirs, d'autres plus grands permettant le passage du liquide autour du tiroir.

De chaque coté, 3 conduits débouchent dans les alésages latéraux. Les centraux 21 a et 21 b sont disposés vers l'extérieur et reliés, l'un au réservoir de produit à injecter, l'autre à la portion aval de la conduite du fluide principal. Les deux autres 22a, 22b et 23a, 23b sont reliés à l'alésage central. La position des joints des tiroirs et l'emplacement judicieux des différents alésages assurent la mise en communication au bon moment de chaque face du piston injecteur, avec le réservoir de produit à injecter en phase aspiration, et avec la conduite aval, avec interposition d'un clapet de non retour 30, en phase refoulement.

Le piston injecteur 17 agit en double effet en donnant un volume de produit par course aller et le même volume par course retour ce qui réalise une injection très régulière et quasi continue dans le flux principal.

La face d'extrémité de chaque tiroir située du coté du moteur hydraulique étant obligatoirement soumise à la pression du liquide principal, il est particulièrement avantageux de donner exactement le même diamètre à chaque élément des tiroirs, de fermer l'extrémité 24a, 24b du logement opposée à la liaison mécanique et de disposer, à l'intérieur de chaque tiroir, un conduit 25a, 25b mettant en communication ses deux faces opposées, réalisant ainsi un équilibrage des efforts indépendant du niveau de pression du liquide principal.

Le piston injecteur 17 et le tube 18 dont il est solidaire sont libres de se déplacer le long de la tige 15, dans un intervalle "A" déterminé par deux butées, l'une fixe constituée par la pièce de liaison 26 de la tige 15 au piston moteur, l'autre mobile constituée par un écrou 27 disposé sur la partie extrême filetée de la tige 15. Il est avantageux de prévoir des tampons élastiques 28 et 29 intercallés à chaque extrémité du tube 18.

Le mouvement résultant du piston 17 sera déterminé par la course du piston moteur diminuée de l'espace "A" laissé libre entre les butées. Si cet espace est nul, la course du piston 17 sera la même que celle du piston moteur et le volume injecté sera maximal. Si cet espace est égal ou supérieur à la course du piston moteur, le mouvement du piston 17 sera nul et il n'y aura aucune injection. Bien entendu toutes les valeurs intermédiaires sont réalisables.

Si les quatre pistons principaux ont un diamètre "D" cm et si l'excentration de l'axe 8 est de "L"cm, chaque tour des rotors correspond à un volume de liquide traversant de :

$$V = 4 \times 2\,L \times \pi\,(D^2/4)\ cm^3$$

Avec un piston injecteur 17 de diamètre $d_i$ et un tube 18 de diamètre $d_t$, chaque tour des rotors générera deux injections correspondant à un volume maximal, pour une valeur de"A" égale à 0, de :

$$v_i\,max = 2 \times 2\,L\ \pi\,(d_i^2 - d_t^2)/4\ cm^3$$

pour "A" = 2L $v_i$ min = 0

La gamme des dosages réalisables pour chaque ensemble d'injection va de :

Dosage maximal : $v_i max_{/V} = 50\,(d_i^2 - d_t^2)/D^2$ %

à Dosage minimal : 0%

Par exemple, si D = 8 cm, $d_i$ = 3,2 cm et $d_t$ = 1,2 cm, le dosage maximal sera de : $50 \times (3,2^2 - 1,2^2)/8^2 = 6,88$ %

Bien entendu, il est possible de disposer un ensemble complet comprenant un bloc 16, son piston injecteur 17 et ses tiroirs associés 20a et 20b en correspondance avec chacun des quatre pistons moteurs. Si tous les ensembles d'injection sont reliés au même produit à injecter, la somme des débits se fera avec une très grande régularité de dosage.

Il est également possible de relier chaque ensemble d'injection à un produit différent si les conditions d'emploi le demandent.

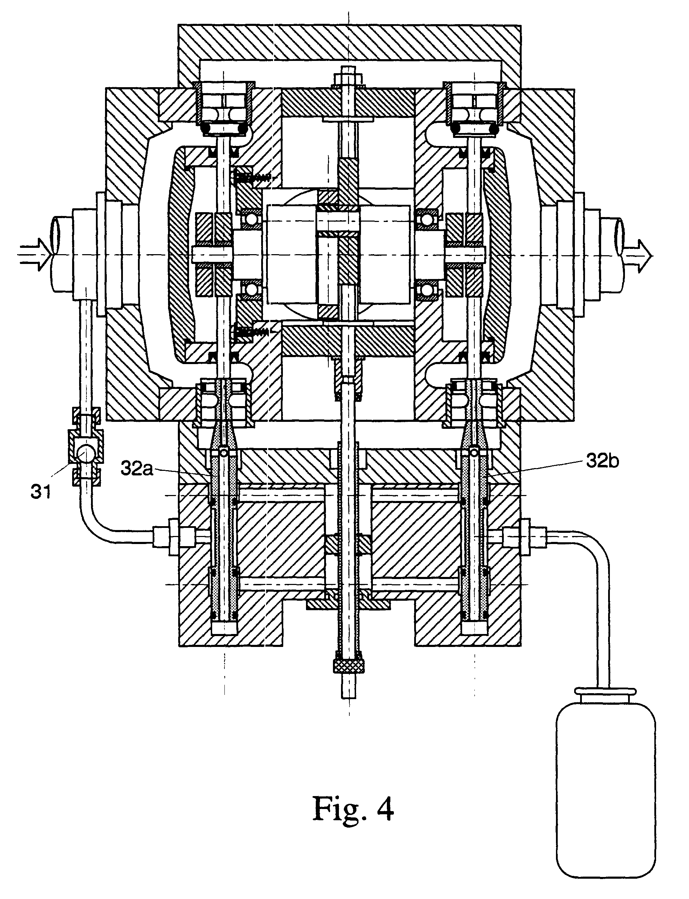

La figure 4 représente une variante du dispositif selon l'invention où la disposition des tiroirs 32a et 32b permet d'inverser le sens de circulation du liquide secondaire dans l'injecteur. Cette disposition est particulièrement avantageuse dans le cas où le liquide secondaire n'est pas agressif et où il est possible de l'injecter, à travers le clapet de non retour 31, dans la conduite d'entrée du liquide principal, le brassage au travers du moteur hydraulique conduisant à une meilleure homogénéité du mélange.

## Revendications

1. Dispositif destiné à injecter un produit liquide secondaire dans le flux d'un produit liquide principal, dans des proportions ajustables, composé:

   - d' un moteur hydraulique volumétrique comprenant quatre pistons (2a), (2b), (2c), (2d), assemblés en deux paires alignées, coulissant dans quatre alésages alignés deux par deux et orthogonaux entr'eux, aménagés dans un corps principal (1) contenant un ensemble axial de rotors (9a), (9b) tournant autour de paliers (10a), (10b), réunis par un axe excentré (8) sur lequel viennent s'appuyer les rainures transversales (6a), (6b) ménagées dans les pièces (5a), (5b) reliant chaque paire de pistons, chaque rotor étant muni d'un maneton excentré, (11a), (11b) décalé de 90° par rapport à la position de l'axe (8), entraînant chacun deux paires de tiroirs (12a), (12b) disposés dans des logements aménagés de part et d'autre de chaque piston de telle manière qu'ils assurent la communication alternative entre les alésages contenant les pistons et une cavité reliée à l'entrée du liquide principal d'une part, et une cavité reliée à la sortie du liquide principal d'autre part, une culasse (3a), (3b), (3c) et (3d) assurant à la fois la fermeture des alésages et le passage du liquide principal entre les logements des tiroirs et les alésages contenant les pistons, agencé de telle façon que le tiroir commandant l'entrée du liquide principal permette la communication pendant la durée exacte de la course croissante du piston, et que le tiroir commandant la sortie du liquide principal permette la communication pendant la durée exacte de la course décroissante du piston,

- d'un injecteur de liquide secondaire comprenant une tige (15) fixée rigidement à l'un des piston, le long de laquelle est monté un tube 18 portant un piston injecteur (17), coulissant entre une butée fixe (26) côté piston moteur et une butée réglable (27) disposée à l'autre extrémité de la tige (15), comprenant aussi un corps d'injecteur (16) pourvu d'un alésage contenant le piston injecteur et de deux logements latéraux contenant chacun respectivement un tiroir (20a) distribuant le liquide secondaire venant du réservoir vers la face du piston injecteur, et un tiroir (20b) conduisant le liquide secondaire vers le conduit de sortie du liquide principal, chacun des tiroirs (20a) et (20b) étant relié positivement rexpectivement au tiroir moteur (12c) et au tiroir moteur (12d).

2. Dispositif selon la revendication 1 **caractérisé en ce que** chaque tiroir de l'injecteur de liquide secondaire se déplace dans un logement muni d'une fermeture (24a), (24b) à son extrémité opposée à la fixation mécanique, et qu'il est pourvu d'un conduit central (25a), (25b) mettant en communication ses faces extrêmes.

3. Dispositif selon les revendications 1 et 2 **caractérisé en ce que** le refoulement de l'injecteur de produit secondaire est relié au conduit de sortie du liquide principal par un clapet de non-retour (30).

4. Dispositif selon les revendications 1 et 2 **caractérisé en ce que** le refoulement de l'injecteur de produit secondaire est relié au conduit d'entrée du liquide principal par un clapet de non-retour (31).

5. Dispositif selon les revendications 1 à 4 **caractérisé en ce que** le tube coulissant (18) vient s'appuyer sur des tampons élastiques (28) et (29) associés à ses butées respectives (26) et (27).

6. Dispositif selon les revendications 1 à 5 **caractérisé en ce que** plusieurs injecteurs de liquide secondaire sont disposés chacun en liaison avec l'un des pistons du moteur hydraulique.

7. Dispositif selon la revendication 6 **caractérisé en ce que** tous les injecteurs de liquide secondaire sont alimentés avec le même produit.

8. Dispositif selon la revendication 6 **caractérisé en ce que** les injecteurs de liquide secondaire sont alimentés avec des produits différents.

**Patentansprüche**

1. Vorrichtung zur Einspritzung eines flüssigen Sekundärprodukts in den Strom eines flüssigen Hauptprodukts in einstellbaren Anteilen, die folgendes umfaßt:

- einen Verdränger-Hydromotor mit vier Kolben (2a), (2b), (2c), (2d), die in zwei aufeinander ausgerichteten Paaren angeordnet sind, in vier immer paarweise und senkrecht zueinander angeordneten Bohrungen gleiten, in einem Hauptkörper (1) angeordnet sind, der eine axiale Anordnung von Rotoren (9a), (9b) enthält, die sich um Lager (10a), (10b) drehen, durch eine exzentrische Achse (8) vereinigt werden, an der die in den Teilen (5a), (5b) ausgebildeten Quernuten (6a), (6b) anliegen, die jedes Kolbenpaar miteinander verbinden, wobei jeder Rotor mit einem exzentrischen Kurbelzapfen (11a), (11b) versehen ist, die bezüglich der Position der Achse (8) um 90° versetzt sind und jeweils zwei Paare Schieber (12a), (12b) antreiben, die in auf beiden Seiten jedes Kolbens ausgebildeten Aufnahmen so angeordnet sind, daß sie die abwechselnde Verbindung zwischen den die Kolben enthaltenden Bohrungen und einerseits einem mit dem Eingang der Hauptflüssigkeit verbundenen Hohlraum und andererseits einem mit dem Ausgang der Hauptflüssigkeit verbundenen Hohlraum gewährleisten, wobei ein Kopf (3a), (3b), (3c) und (3d) gleichzeitig das Verschließen der Bohrungen und des Durchgangs der Hauptflüssigkeit zwischen den Aufnahmen der Schieber und den die Kolben enthaltenden Bohrungen gewährleistet, so angeordnet, daß der den Eintritt der Hauptflüssigkeit gestattende Schieber die Verbindung während der exakten Dauer des zunehmenden Hubs des Kolbens gestattet und daß der den Austritt der Hauptflüssigkeit steuernde Schieber die Verbindung während der exakten Dauer des abnehmenden Hubs des Kolbens gestattet,

- eine Einspritzvorrichtung für Sekundärflüssigkeit mit einer starr an einem der Kolben befestigten Stange (15), entlang derer ein Rohr (18) angebracht ist, das einen Einspritzkolben (17) trägt, der zwischen einem festen Anschlag (26) auf Seite des Arbeitskolbens und einem am anderen Ende der Stange (15) angeordneten verstellbaren Anschlag (27) gleitet, und weiterhin mit einem Einspritzvorrichtungskörper (16), der mit einer den Einspritzkolben enthaltenden Bohrung und zwei seitlichen Aufnahmen versehen ist, die jeweils einen die vom Behälter stammende Sekundärflüssigkeit zur Fläche des Einspritzkolbens hin verteilenden Schieber (20a) bzw. einen die Sekundärflüssigkeit zum Ausgangskanal der Hauptflüssigkeit führenden Schieber (20b) enthalten, wobei die Schieber (20a) und (20b) mit dem Arbeitsschieber (12c) bzw. dem Arbeitsschieber (12d) zwangsläufig verbunden sind.

**2.** Vorrichtung nach Anspruch 1, **dadurch gekennzeichnet**, daß jeder Schieber der Einspritzvorrichtung für Sekundärflüssigkeit in einer Aufnahme verschoben wird, die an ihrem der mechanischen Befestigung gegenüberliegenden Ende mit einem Verschluß (24a), (24b) versehen ist, und daß sie mit einem mittleren Kanal (25a), (25b) versehen ist, der ihre Endseiten miteinander verbindet.

**3.** Vorrichtung nach Anspruch 1 und 2, **dadurch gekennzeichnet**, daß die Fördermenge der Einspritzvorrichtung für das Sekundärprodukt über ein Rückschlagventil (30) mit dem Ausgangskanal der Hauptflüssigkeit verbunden ist.

**4.** Vorrichtung nach Anspruch 1 und 2, **dadurch gekennzeichnet**, daß die Fördermenge der Einspritzvorrichtung für das Sekundärprodukt über ein Rückschlagventil (31) mit dem Eingangskanal der Hauptflüssigkeit verbunden ist.

**5.** Vorrichtung nach den Ansprüchen 1 bis 4, **dadurch gekennzeichnet**, daß das Gleitrohr (18) an elastischen Puffern (28) und (29) zur Anlage kommt, die seinen Anschlägen (26) bzw. (27) zugeordnet sind.

**6.** Vorrichtung nach den Ansprüchen 1 bis 5, **dadurch gekennzeichnet**, daß mehrere Einspritzvorrichtungen für Sekundärflüssigkeit jeweils in Verbindung mit einem der Kolben des Hydromotors angeordnet sind.

**7.** Vorrichtung nach Anspruch 6, **dadurch gekennzeichnet**, daß alle Einspritzvorrichtungen für Sekundärflüssigkeit mit dem gleichen Produkt versorgt werden.

**8.** Vorrichtung nach Anspruch 6, **dadurch gekennzeichnet**, daß die Einspritzvorrichtungen für Sekundärflüssigkeit mit verschiedenen Produkten versorgt werden.

**Claims**

**1.** Device intended for injecting a secondary liquid product into the stream of a main liquid product, in adjustable proportions, made up of:

- a positive-displacement hydraulic motor comprising four pistons (2a), (2b), (2c) and (2d), assembled in two aligned pairs, sliding in four bores which are aligned two by two and mutually orthogonal, formed in a main body (1) containing an axial collection of rotors (9a), (9b) rotating about bearings (10a), (10b), connected by an eccentric shaft (8) against which the transverse grooves (6a), (6b) formed in the parts (5a), (5b) connecting each pair of pistons rest, each rotor being fitted with an eccentric wrist pin (11a), (11b) offset by 90° with respect to the position of the shaft (8), each one driving two pairs of slide valves (12a), (12b) arranged in housings formed on each side of each piston so that they provide alternate communication between the bores containing the pistons and a cavity connected to the main-liquid inlet, on the one hand, and a cavity connected to the main-liquid outlet, on the other hand, a head (3a), (3b), (3c) and (3d) both closing the bores and ensuring the passage of the main liquid between the housings of the slide valves and the bores containing the pistons, arranged in such a way that the slide valve controlling the inlet of the main liquid allows communication during the exact duration of the increasing stroke of the piston, and that the slide valve controlling the main-liquid outlet allows communication during the exact duration of the decreasing stroke of the piston,

- a secondary-liquid injector comprising a rod (15) fixed rigidly to one of the pistons, along which rod is mounted a tube (18) carrying an injector piston (17), sliding between a fixed stop (26) on the driving piston side and an adjustable stop (27) located at the other end of the rod (15), also comprising an injector body (16) equipped with a bore containing the injector piston and with two lateral housings each respectively containing a slide valve (20a) distributing the secondary liquid from the reservoir towards the face of the injector piston, and a slide valve (20b) conveying the secondary liquid towards the main-liquid outlet duct, each of the slide valves (20a) and (20b) being positively connected to, respectively, the driving slide valve (12c) and the driving slide valve (12d).

2. Device according to Claim 1, **characterized in that** each slide valve of the secondary-liquid injector moves in a housing equipped with a closure (24a), (24b) at its opposite end to the mechanical fixing, and in that it is provided with a central duct (25a), (25b) placing its end faces in communication.

3. Device according to Claims 1 and 2, **characterized in that** the delivery from the secondary-product injector is connected to the main-liquid outlet duct by a non-return valve (30).

4. Device according to Claims 1 and 2, **characterized in that** the delivery of the secondary-product injector is connected to the main-liquid inlet duct by a non-return valve (31).

5. Device according to Claims 1 to 4, **characterized in that** the sliding tube (18) presses against elastic pads (28) and (29) associated with its respective stops (26) and (27).

6. Device according to Claims 1 to 5, **characterized in that** several secondary-liquid injectors are each arranged in connection with one of the pistons of the hydraulic motor.

7. Device according to Claim 6, **characterized in that** all the secondary-liquid injectors are supplied with the same product.

8. Device according to Claim 6, **characterized in that** the secondary-liquid injectors are supplied with different products.

Fig. 1

Fig. 2

Fig. 3

Fig. 4